# FASCICULE DE BREVET EUROPEEN

(11) **EP 2 417 372 B1**
(45) Date de publication et mention de la délivrance du brevet: **07.06.2017**
(21) Numéro de dépôt: 10714228.3
(22) Date de dépôt: 06.04.2010
(51) Int. Cl.: F16D 7/02, B64C 25/50

(54) **ATTERRISSEUR EQUIPE D'UN DISPOSITIF DE TRANSMISSION SELECTIVE D'EFFORT**
FAHRWERK MIT EINER VORRICHTUNG ZUR GEZIELTEN KRAFTÜBERTRAGUNG
LANDING GEAR PROVIDED WITH A SELECTIVE FORCE TRANSMISSION DEVICE

(30) Priorité: 06.04.2009 FR 0901684
(43) Date de publication de la demande: 15.02.2012
(73) Titulaire: Safran Landing Systems, 78140 Vélizy-Villacoublay (FR)
(72) Inventeur: LAFITTE, Arnaud, F-92370 Chaville (FR); BALDUCCI, Gérard, F-78640 Saint Germain de la Grange (FR)
(74) Mandataire: Parzy, Benjamin Alain
(86) Numéro de dépôt international: PCT/EP2010/054536
(87) Numéro de publication internationale: WO 2010/115893

(56) Documents cités:
- EP-A1- 1 845 016
- FR-A1- 2 905 997
- GB-A- 2 321 504
- US-A- 2 974 503
- US-A- 4 067 425

## Description

L'invention est relative à un atterrisseur à partie inférieure orientable équipé d'un dispositif de transmission sélective d'effort.

### ARRIERE-PLAN TECHNOLOGIQUE DE L'INVENTION

On connaît du document FR2905997 des dispositifs de transmission d'effort comportant un premier élément et un deuxième élément qui est monté mobile sur le premier élément mais qui est retenu immobile sur ce dernier jusqu'à ce que l'effort imposé par le premier élément dépasse un seuil donné. Au-delà de ce seuil, le deuxième élément est libéré et peut se déplacer vis-à-vis du premier élément à l'encontre d'un effort résistant égal audit seuil.

Par effort, on entend bien sûr aussi bien un effort qu'un couple si les deux éléments sont montés rotatifs l'un par rapport à l'autre.

En l'occurrence, dans les dispositifs présentés dans le document cité l'effort résistant est exercé par un organe frotteur disposé entre les deux éléments pour exercer entre eux un effort résistant ayant une valeur maximale dépendant d'une précontrainte exercée par un organe presseur.

On s'intéresse ici particulièrement à l'application de tels dispositifs à des atterrisseurs ayant une partie inférieure orientable qui est orientée au moyen d'actionneurs d'orientation. En effet, il est intéressant, notamment dans des atterrisseurs dont la partie inférieure orientable est actionnée par des actionneurs électromécaniques, de pouvoir désengager les actionneurs de la partie inférieure orientable, ou de protéger les actionneurs contre une remontée de couple.

Il a été proposé dans le document FR2899871 d'équiper chacun des actionneurs de dispositif d'embrayage. Une possibilité immédiate serait de disposer le dispositif de transmission d'effort précité en lieu et place de chacun des dispositifs d'embrayage. Le document FR2899871 divulgue un atterrisseur d'aéronef tel que défini dans l'introduction de la revendication 1.

### OBJET DE L'INVENTION

L'invention vise à proposer une autre façon d'intégrer ce dispositif sur un atterrisseur.

Dans certaines circonstances, et notamment lors d'un remorquage de l'aéronef par un tracteur attelé à la partie inférieure orientable de l'atterrisseur, il est intéressant de pouvoir désaccoupler les actionneurs de la partie inférieure orientable. Cependant, si un tel désaccouplement a été omis, le moteur et le réducteur de chacun des actionneurs subissent un couple imposé par la rotation de la partie inférieure orientable de l'atterrisseur sous l'action du tracteur. Il est alors désirable de protéger les moteurs des actionneurs électromécaniques d'orientation et les réducteurs associés pour éviter qu'un couple trop important n'endommage les actionneurs.

A l'inverse, il se peut que les actionneurs d'orientation soient commandés de façon intempestive alors que les roues de l'atterrisseurs sont empêchées de tourner soit par des cales, soit par une barre de remorquage attelée à la partie inférieure de l'atterrisseur.

Il est alors intéressant d'équiper un tel atterrisseur d'un dispositif permettant de désaccoupler les actionneurs, ou, à défaut de transmettre un couple uniquement jusqu'à un seuil déterminé, évitant d'endommager l'atterrisseur.

### BREVE DESCRIPTION DE L'INVENTION

En vue de la réalisation de ce but, on propose un atterrisseur d'aéronef comportant un caisson qui porte une partie inférieure orientable équipée d'une ou plusieurs roues, et au moins un actionneur d'orientation porté par le caisson pour orienter sélectivement la partie inférieure orientable, l'atterrisseur comportant un dispositif de transmission sélective d'effort qui comprend un premier élément et un deuxième élément qui est monté mobile sur le premier élément, un organe frotteur étant disposé entre le premier élément et le deuxième élément pour exercer entre les deux éléments un effort de friction ayant une valeur maximale dépendant d'une précontrainte installée par un organe presseur, le dispositif comportant des moyens de commande de variation de la précontrainte installée par l'organe presseur sur l'organe frotteur qui sont agencés pour pouvoir relâcher substantiellement la précontrainte installée par l'organe presseur de sorte que celle-ci devienne substantiellement nulle, le dispositif étant disposé sur l'atterrisseur de sorte que le premier élément du dispositif de transmission soit solidaire en rotation de la partie inférieure orientable, et le deuxième élément du dispositif de transmission soit solidaire d'une portion de l'atterrisseur actionnée par l'actionneur d'orientation.

Ainsi, en faisant varier de façon commandée la précontrainte exercée par l'organe presseur, il est non seulement possible d'ajuster la résistance du dispositif et ainsi le seuil d'effort transmissible, mais il est également possible, en annulant la précontrainte, de libérer totalement les deux éléments. Ainsi, le dispositif devient un dispositif d'accouplement à seuil d'effort ajustable, mais également de désaccouplement commandé.

Ainsi, les moyens de variation de seuil du dispositif permettent à volonté de désolidariser la partie inférieure orientable de l'atterrisseur, ce qui permet la libre orientation de la partie inférieure orientable par exemple sous l'effet de la traction exercée par un tracteur de remorquage, ou, toujours à volonté, de moduler le couple maximale transmissible entre la couronne et la partie inférieure orientable. Ainsi, si par exemple l'un des actionneurs vient à défaillir, on pourra abaisser le seuil de couple transmissible pour éviter d'endommager l'actionneur valide restant.

Le dispositif de transmission d'effort ainsi disposé peut coopérer avec plusieurs actionneurs d'orientation.

### BREVE DESCRIPTION DES FIGURES

L'invention sera mieux comprise à la lumière de la description qui suit des figures des dessins annexés, parmi lesquelles :
- la figure 1 est une vue schématique en perspective d'un dispositif selon un premier mode particulier de réalisation de l'invention ;
- la figure 2 est une vue schématique en coupe d'un dispositif selon un deuxième mode particulier de réalisation de l'invention ;
- la figure 3 est une vue en perspective partielle éclatée du dispositif de la figure 2 ;
- la figure 4 est une vue en coupe d'un atterrisseur d'aéronef équipé du dispositif illustré aux figures 2 et 3.

### DESCRIPTION DETAILLEE DES FIGURES

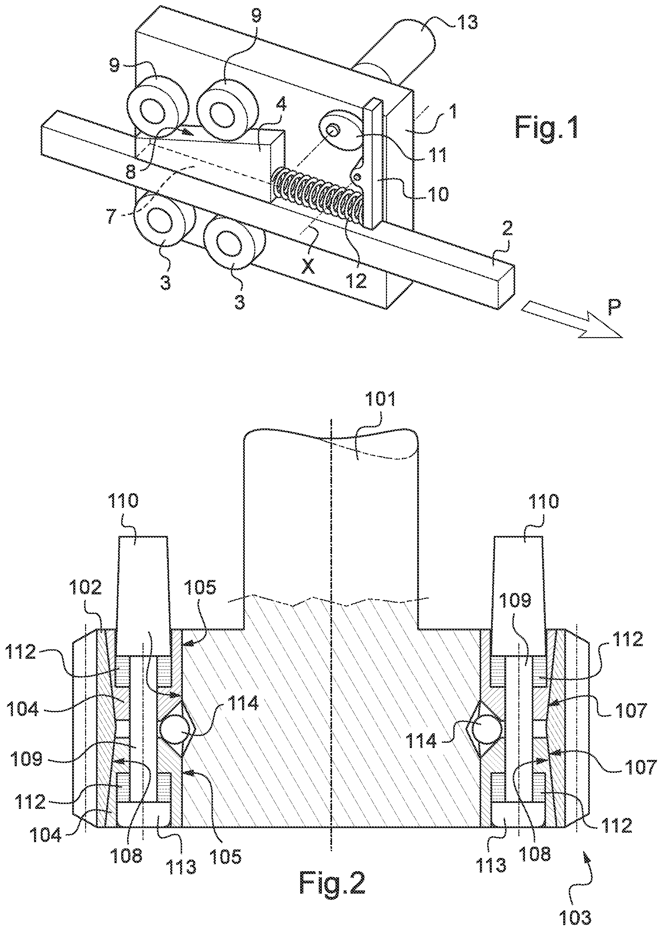

La figure 1 est un perfectionnement selon l'invention du dispositif illustré à la figure 1 du document FR2905997.

On reconnaît le premier élément 1 sur lequel le deuxième élément 2 est monté pour coulisser selon la direction indiquée par la flèche P. A cet effet, des galets 3 montés tournants sur le premier élément 1 guident le deuxième élément 2. Un organe frotteur, en l'occurrence un coin 4, comportant d'une part une surface de frottement 7 contre le deuxième élément 2 et d'autre part une surface d'appui 8 faisant un angle avec la surface de frottement, est disposé entre le deuxième élément 2 et des galets d'appui 9 montés tournants sur le premier élément 1. Le coin 4 est rappelé vers une position de coincement par un organe presseur, en l'occurrence un ressort 12 s'étendant entre le coin 4 et l'extrémité d'un levier 10 monté pivotant sur le premier élément 1 autour d'un axe X. L'autre extrémité du levier 10 est attaquée par une came 11 à excentrique portée en extrémité de l'arbre d'un moteur électrique 13.

En faisant tourner la came 11 au moyen du moteur 13, il devient ainsi possible de faire varier la précontrainte exercée par le ressort 12 sur le coin 4, d'une valeur maximale (position illustrée sur la figure), à une valeur nulle (la came 11 est alors pivotée de 180 degrés). Dans cette position, le ressort 12 est alors complètement relâché.

Ainsi, tant que l'effort avec lequel on tire sur le deuxième élément 2 ne dépasse pas un effort seuil imposé par l'effort exercé par le ressort, le deuxième élément 2 est immobile et ne peut se déplacer relativement au premier élément 1. Si l'effort de traction dépasse cet effort seuil, alors le deuxième élément 2 se déplace, à l'encontre d'un effort résistant égal à l'effort maximal précité.

Grâce aux dispositions de l'invention, il est possible de faire varier à volonté l'effort résistant qu'exerce le coin sur le deuxième élément 2 lors de ses déplacements vis-à-vis du premier élément 1, voire l'annuler si besoin.

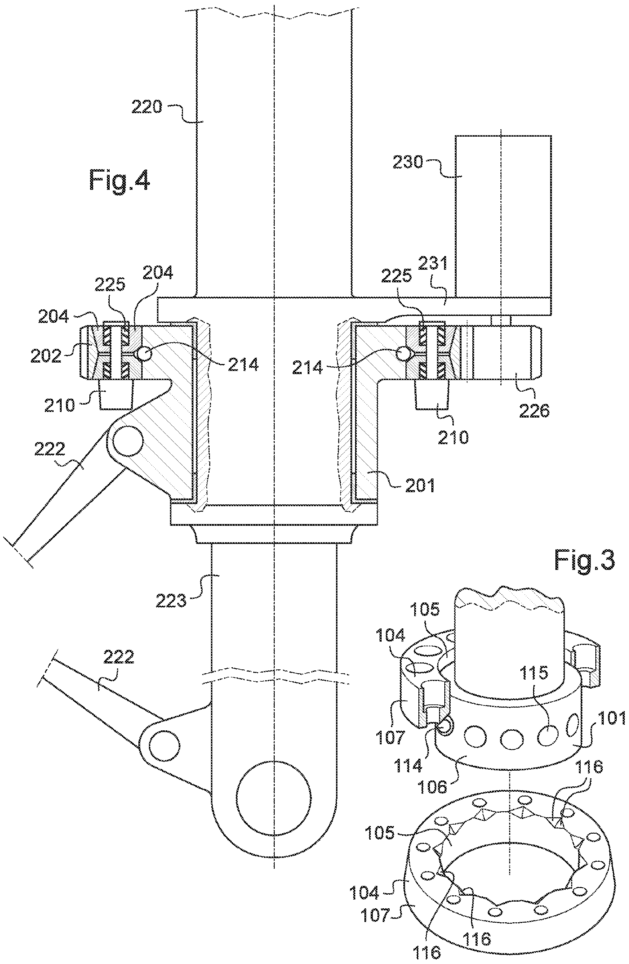

Le dispositif illustré aux figures 2 et 3 du présent document est quant à lui un perfectionnement du dispositif illustré aux figures 2, 3 et 4 du document FR2905997. Pour le détail du fonctionnement de ce dispositif, on se reportera utilement au document précité. Il suffit ici de rappeler que le dispositif comporte un premier élément, ici un arbre 101, et un deuxième élément, ici une couronne dentée 102 qui s'étend coaxialement à l'arbre 101. Entre les deux éléments est disposé un dispositif transmetteur 103 qui comporte un organe frotteur sous la forme de deux bagues 104 montées en miroir, comportant chacune une portée 105 intérieure cylindrique circulaire qui s'étend en appui sur une portée cylindrique circulaire 106 de l'arbre 101, et une portée extérieure tronconique 107 de faible pente, coopérant avec une portée tronconique 108 homologue de la couronne dentée 102. On constate que, du fait de la disposition en miroir des bagues 104, la portée 108 de la couronne dentée 102 qui coopère avec les bagues 104 est biconique.

Les bagues 104 sont percées d'orifices axiaux traversants dans chacun desquels une tige mobile 109 d'un actionneur de précontrainte 110 est engagée. Les orifices axiaux comportent, des épaulements qui définissent des faces d'appui recevant des rondelles ressorts 112 qui, prenant appui d'une part sur le corps de l'actionneur de précontrainte 110 et d'autre part sur un talon d'extrémité 113 de la tige mobile 109, exercent une précontrainte sur les bagues 104 tendant à appuyer les portées des bagues 104 sur l'arbre 101 d'une part et sur la couronne dentée 102 d'autre part.

Pour assurer l'arrêt en rotation et en déplacement axial des bagues 104 vis-à-vis de l'arbre 101, et comme cela est plus particulièrement visible à la figure 3, des billes 114 (seule l'une d'elle est ici représentée) sont disposées pour être coincées, d'une part, dans des cavités 115 en forme de calotte sphérique ménagées dans l'arbre 101 et, d'autre part, dans des demi-cavités à facettes 116 taillées dans chacune des bagues 104. Lorsque les bagues 104 sont rapportées sur l'arbre 101 et sont maintenues pressées entre elles par les rondelles ressorts 112, les billes 114 sont chacune prisonnières d'une cavité formée par une cavité 115 en forme de calotte sphérique et deux demi-cavités à facettes 116 s'étendant en regard et appartenant chacune à une des bagues 104. Les billes 114 forment ainsi un obstacle assurant l'arrêt en rotation et en déplacement axial des bagues 104 vis-à-vis de l'arbre 101. Le fonctionnement de l'ensemble est le suivant. A l'aide des actionneurs de précontrainte 110, on installe une précontrainte déterminée sur les bagues 104. Du fait de l'obstacle formé par billes 114, les bagues 104 sont astreintes à tourner, quelque soit le couple imposé par l'arbre 101. Le couple est transmis à la couronne dentée 102 par friction entre les portées coniques des bagues 104 et de la couronne 102. Si ce couple dépasse une valeur maximale déterminée par la valeur de la précontrainte installée, la couronne dentée glisse sur les bagues 104.

Ainsi, l'accouplement entre la couronne dentée 102 et l'arbre 101 est réalisé avec limitation en couple. Bien sûr, cette limitation vaut également pour un couple imposé par la couronne 102 sur l'arbre 101, ou pour un couple imposé par l'arbre 101 sur la couronne 102.

Si l'on désire désaccoupler l'arbre 101 et la couronne dentée 102, il suffit de commander les actionneurs de précontrainte 110 pour qu'ils relâchent complètement la précontrainte imposée par les rondelles ressorts 112 sur les bagues 104. Ainsi, la couronne 102 est libérée de l'arbre 101 et peut tourner librement (aux frottements résiduels près) vis-à-vis de l'arbre 101.

Les actionneurs de précontrainte 110 sont ici avantageusement du type piézoélectrique. Mais toute autre technologie (hydraulique, électromécanique...), peut être envisagée dans le cadre de l'invention.

Ce principe est maintenant appliqué à la commande d'orientation des atterrisseurs, comme illustré à la figure 4. On reconnaît sur cette figure le caisson 220 de l'atterrisseur sur lequel un manchon tournant 201 est monté rotatif. De façon classique, le manchon tournant 201 est relié par un compas 222 (dont on distingue les deux branches) à une tige coulissante 223 portant des roues (non visibles ici) à son extrémité basse. Le compas 222 permet le libre coulissement de la tige coulissante 223 dans le caisson 220, tout en permettant la rotation de la tige coulissante 223 et donc des roues portées par elle sous l'effet d'une rotation du manchon tournant 201.

A cet effet, le manchon tournant 201 est équipé d'une couronne dentée 202 qui est ici reliée au manchon tournant 201 par des moyens d'accouplement commandables en tout point similaires à ceux décrits en relation avec les figures 2 et 3. On reconnaît les bagues 204, les rondelles ressorts 212, les billes 214, et les actionneurs de précontrainte 210.

La couronne dentée 202 est attaquée par un pignon 226 d'un actionneur électromécanique d'orientation 230 fixé à un plateau 231 solidaire du caisson 220. L'actionneur électromécanique comporte au moins un moteur électrique agencé pour entraîner le pignon 226 pour entraîner la couronne dentée 202, qui, par l'intermédiaire du dispositif à transmission à seuil de l'invention, entraîne le manchon tournant 201, ce qui provoque la rotation de la tige coulissante 223 et donc l'orientation des roues portées par cette dernière.

Pour désolidariser la partie inférieure orientable de l'atterrisseur des actionneurs d'orientation 230, il suffit de commander les actionneurs de précontrainte 210 pour qu'ils relâchent les rondelles ressorts 212 de sorte qu'elles n'exercent plus de contrainte sur les bagues 204.

La désolidarisation peut intervenir à l'occasion d'un remorquage, pour éviter que les orientations de la partie inférieure de l'atterrisseur imposées par le tracteur ne viennent endommager l'actionneur d'orientation 230. Elle peut également intervenir si l'actionneur d'orientation 230 provoque des orientations intempestives.

En temps normal, le dispositif de l'invention permet une transmission de couple depuis l'actionneur d'orientation vers le manchon tournant, avec une limitation du couple transmis à une valeur qui peut être réglée par commande des actionneurs de précontrainte 210.

Dans les exemples illustrés, la précontrainte exercée par l'organe presseur est contrôlée en déplaçant de façon commandée le siège contre lequel l'organe ressort est appuyé relativement à l'organe transmetteur. Il existe bien sûr d'autres moyens commandés de variation de la précontrainte. Par exemple, si l'organe presseur est du type à gaz, on pourra faire varier la pression du gaz.

Par organe presseur, on entend tout organe susceptible de générer une contrainte lorsqu'il est précontraint, en présentant une course qui peut être faible mais suffisante pour laisser le deuxième élément glisser sur la surface de frottement de l'organe de transmission à friction. Le terme recouvre par exemple les ressorts hélicoïdaux, les rondelles ressorts, mais également les ressorts à gaz, ou même les vérins hydrauliques, dans la mesure où l'huile emprisonnée dans le vérin est susceptible d'une légère compression.

En outre, bien que les moyens de variation de la précontrainte sont ici progressifs de sorte que l'on puisse installer la précontrainte désirée, on pourra prévoir des moyens de variation en tout ou rien, présentant uniquement deux positions commandées, dont l'une correspond à une précontrainte déterminée, et l'autre correspond au relâchement complet de la précontrainte.

## Revendications

1. Atterrisseur d'aéronef comportant un caisson (220) qui porte une partie inférieure orientable (201, 223) portant une ou plusieurs roues, et au moins un actionneur d'orientation (230) porté par le caisson pour orienter sélectivement la partie inférieure orientable, l'atterrisseur comportant un dispositif de transmission sélective d'effort
**caractérisé en ce que**
ledit dispositif de transmission sélective d'effort comprend un premier élément (1 ; 101 ; 201) et un deuxième élément (2 ; 102 ; 202) qui est monté mobile sur le premier élément, un organe frotteur (4 ; 104 ; 204) étant disposé entre le premier élément et le deuxième élément pour exercer entre les deux éléments un effort de friction ayant une valeur maximale dépendant d'une précontrainte installée par un organe presseur (12 ; 112 ; 212), le dispositif comportant des moyens de commande (10, 11, 13 ; 110 ; 210) de variation de la précontrainte installée par l'organe presseur sur l'organe frotteur qui sont agencés pour pouvoir relâcher substantiellement la précontrainte installée par l'organe presseur de sorte que celle-ci devienne substantiellement nulle, le dispositif étant disposé sur l'atterrisseur de sorte que le premier élément (201) du dispositif de transmission soit solidaire en rotation de la partie inférieure orientable, et le deuxième élément (202) du dispositif de transmission soit solidaire d'une portion de l'atterrisseur actionnée par l'actionneur d'orientation.

2. Atterrisseur selon la revendication 1, dans lequel l'organe presseur comprend un organe élastique précontraint (12 ; 112 ; 212), les moyens de variation de précontrainte (10, 11, 13 ; 110 ; 210) étant agencés pour modifier la précontrainte de l'organe élastique.

3. Atterrisseur d'aéronef selon la revendication 2, dans lequel le premier élément du dispositif de transmission est constitué par un manchon (201) monté tournant sur le caisson de l'atterrisseur, tandis que le deuxième élément du dispositif de transmission est une couronne (202) qui engrène avec un pignon de sortie (226) de l'actionneur d'orientation (230).

## Patentansprüche

1. Luftfahrzeugfahrwerk, umfassend einen Kasten (220), der einen ausrichtbaren unteren Teil (201, 223) trägt, welcher ein oder mehrere Räder trägt, und mindestens einen Ausrichtungsaktor (230), der von dem Kasten getragen wird, um den ausrichtbaren unteren Teil selektiv auszurichten, wobei das Fahrwerk eine Vorrichtung zur selektiven Kraftübertragung umfasst, **dadurch gekennzeichnet, dass** die genannte Vorrichtung zur selektiven Kraftübertragung ein erstes Element (1; 101; 201) und ein zweites Element (2; 102; 202) umfasst, das beweglich an dem ersten Element anbracht ist, wobei ein Reiborgan (4; 104; 204) zwischen dem ersten Element und dem zweiten Element angeordnet ist, um zwischen den beiden Elementen eine Reibkraft mit einem maximalen Wert auszuüben, der von einer Vorspannung abhängt, die durch ein Pressorgan (12; 112; 212) eingebracht wird, wobei die Vorrichtung Steuermittel (10, 11, 13; 110; 210) zur Veränderung der durch das Pressorgan auf das Reiborgan eingebrachten Vorspannung umfasst, die ausgebildet sind, um die durch das Pressorgan eingebrachte Vorspannung im Wesentlichen abbauen zu können, so dass sie im Wesentlichen Null wird, wobei die Vorrichtung an dem Fahrwerk derart angeordnet ist, dass das erste Element (201) der Übertragungsvorrichtung drehfest mit dem ausrichtbaren unteren Teil verbunden ist, und das zweite Element (202) der Übertragungsvorrichtung fest mit einem Abschnitt des Fahrwerks verbunden ist, der von dem Ausrichtungsaktor betätigt wird.

2. Fahrwerk nach Anspruch 1, bei dem das Pressorgan ein vorgespanntes elastisches Element (12; 112; 212) umfasst, wobei die Mittel (10, 11, 13; 110; 210) zum Verändern der Vorspannung ausgebildet sind, um die Vorspannung des elastischen Organs zu ändern.

3. Luftfahrzeugfahrwerk nach Anspruch 2, bei dem das erste Element der Übertragungsvorrichtung von einer Hülse (201) gebildet ist, die drehbar an dem Kasten des Fahrwerks angebracht ist, während das zweite Element der Übertragungsvorrichtung ein Kranz (202) ist, der mit einem Abtriebsritzel (226) des Ausrichtungsaktors (230) in Eingriff steht.

## Claims

1. An aircraft undercarriage including a strut (220) that carries a steerable bottom portion (201, 223) carrying one or more wheels, and at least one steering actuator (230) carried by the strut to steer the steerable bottom portion in selective manner, the undercarriage including a selective force transmission device **characterized in that** said selective force transmission device comprises a first element (1; 101; 201) and a second element (2; 102; 202) that is mounted to move relative to the first element, a friction member (4; 104; 204) being arranged between the first element and the second element to exert a friction force between the two elements, which force presents a maximum value that depends on prestress established by a presser member (12; 112; 212), the device including control means (10, 11, 13; 110; 210) for varying the prestress imparted by the presser member to the friction member, which control means are arranged to be capable of substantially releasing the prestress imparted by the presser member so that the prestress becomes substantially zero, the device being arranged on the undercarriage in such a manner that the first element (201) of the transmission device is constrained in turning with the steerable bottom portion, and the second element (202) of the transmission device is constrained in turning with a portion of the undercarriage that is actuated by the steering actuator.

2. An undercarriage according to claim 1, wherein the presser member comprises a resilient prestress member (12; 112; 212) the prestress varying means (10, 11, 13; 110; 210) being arranged to modify the prestress of the resilient member.

3. An aircraft undercarriage according to claim 2, wherein the first element of the transmission device is constituted by a sleeve (201) mounted to turn on the strut of the undercarriage, while the second element of the transmission device is a toothed rim (202) that meshes with an outlet gearwheel (226) of the steering actuator (230).
